Europäisches Patentamt

European Patent Office

Office européen des brevets

(19)

(11) Veröffentlichungsnummer: **0 032 671**
**B1**

(12) # EUROPÄISCHE PATENTSCHRIFT

(45) Veröffentlichungstag der Patentschrift:
22.12.82

(51) Int. Cl.³: **B 01 J 41/14, B 01 J 41/04**

(21) Anmeldenummer: 81100062.9

(22) Anmeldetag: 08.01.81

(54) **Anionenaustauscher, Verfahren zu ihrer Herstellung und ihre Verwendung.**

(30) Priorität: **19.01.80 DE 3001856**

(43) Veröffentlichungstag der Anmeldung:
**29.07.81 Patentblatt 81/30**

(45) Bekanntmachung des Hinweises auf die Patenterteilung:
**22.12.82 Patentblatt 82/51**

(84) Benannte Vertragsstaaten:
**DE FR GB IT NL**

(56) Entgegenhaltungen:
**DE-B-1 031 964**
**DE-C-956 449**
**FR-A-2 378 559**
**GB-A-1 364 691**
**US-A-2 862 894**
**US-A-3 051 651**
**US-A-3 791 866**
**US-A-4 082 701**

(73) Patentinhaber: **BAYER AG, Zentralbereich Patente, Marken und Lizenzen, D-5090 Leverkusen 1, Bayerwerk (DE)**

(72) Erfinder: **Heller, Harold, Dr., Hahnenweg 4, D-5000 Köln 80 (DE)**
Erfinder: **Lange, Peter-Michael, Dr., Walter-Flex-Strasse 9, D-5090 Leverkusen (DE)**
Erfinder: **Martinola, Friedrich, Dr., Leopold-Gmelin-Strasse 16, D-5000 Köln 80 (DE)**

Anionenaustauscher, Verfahren zu ihrer Herstellung und ihre Verwendung

In der Wasseraufbereitungstechnik werden zur Adsorption schwacher Säuren, besonders der Kieselsäure und ihrer Salze, bislang starkbasische Anionenaustauscher eingesetzt, d.h. Anionenaustauscher, die praktisch ausschliesslich quaternäre Ammoniumgruppen enthalten. Die Leistung dieser Anionenaustauscher wird durch ihre Nutzbare Kapazität (NK) gekennzeichnet, d.h. durch ihr Adsorptionsvermögen für Kieselsäure unter Praxisbedingungen. Die Nutzbare Kapazität der Anionenaustauscher wird in erster Linie durch ihren Gehalt an starkbasischen Gruppen pro Volumeneinheit und ihre Regenerierbarkeit nach der Beladung bestimmt. Daneben sind für die Leistung der Anionenaustauscherharze unter Praxisbedingungen die Konzentrationen und Mengenverhältnisse der im Wasser gelösten Stoffe (Ionen), die sogenannte Wasserzusammensetzung, bestimmend, ferner auch die angewendete Verfahrenstechnik (vgl. Ullmanns Enzyklopädie der technischen Chemie, 4. Auflage, 1977, Band 13, Seiten 315–330). Dies gilt sowohl für die Nutzbare Kapazität der starkbasischen Anionenaustauscher vom Polystyrol-Typ, die heute noch weitaus am häufigsten für die Entfernung der schwachen Säuren eingesetzt werden, wie auch für die weniger gebräuchlichen starkbasischen Anionenaustauscher auf Basis vernetzter N-alkylierter Polyacrylamide (Polyacrylamid-Typ).

Die Nutzbare Kapazität dieser bekannten starkbasischen Anionenaustauscher mit ausschliesslich quartären Ammoniumgruppen für schwache Säuren ist aber technisch unbefriedigend. Man hat deshalb versucht, diese unbefriedigende Leistung durch eine verbesserte Verfahrenstechnik auszugleichen. Dies erfordert aber einen höheren technischen Aufwand (vgl. Ullmanns Enzyklopädie der technischen Chemie, lc.).

Ausserdem hat man zur Adsorption schwacher Säuren teilquaternierte Anionenaustauscher vom Polystyrol-Typ vorgeschlagen (s. z.B. DE-A-2802642). Diese teilquaternierten Anionenaustauscher vom Polystyrol-Typ enthalten sowohl starkbasische, d.h. quaternäre Ammoniumgruppen, als auch schwachbasische, tertiäre Aminogruppen. Diese teilquaternierten Anionenaustauscher vom Polystyrol-Typ weisen zwar gegenüber den bekannten starkbasischen Anionenaustauschern unter vergleichbaren Bedingungen oftmals höhere Nutzbare Kapazitäten und eine bessere Ausnutzung des Regeneriermittels auf; trotzdem haben sie aber nicht zu einer allgemeinen Leistungsverbesserung geführt und daher bislang keine breite Anwendung in der Wasseraufbereitungstechnik gefunden. Bei der Entsäuerung von Wässern, die vorwiegend schwache Säuren enthalten (z.B. bei ihrer Verwendung in Kombination mit starksauren Kationenaustauschern und schwachbasischen Anionenaustauschern) weisen sie sogar noch niedrigere Nutzbare Kapazitäten als die vollquaternierten starkbasischen Anionenaustauscher auf.

Aus der US-A 4082701 sind mit hydrophoben Alkylresten partiell quaternierte Anionenaustauscher auf Basis vernetzter N-alkylierter Polyacryl- oder Polymethacrylamide bekannt. Aufgrund der hydrophoben Gruppen weisen die Anionenaustauscher eine hohe Affinität für wenig oder gar nicht ionisierte färbende Stoffe auf und werden deshalb zum Entfernen von färbenden Stoffen aus Zuckerlösungen verwendet.

Es wurde nun gefunden, dass man zu Anionenaustauschern mit einer wesentlich verbesserten Nutzbaren Kapazität für schwache Säuren gelangt, deren Nutzbare Kapazität auch bei der Entsäuerung von Wässern, die ausschliesslich schwache Säuren enthalten, wesentlich höher ist als die von vollquaternierten starkbasischen Anionenaustauschern, wenn man einen gewissen Teil der Aminogruppen in schwachbasischen Anionenaustauschern auf Basis vernetzter N-alkylierter Polyacryl- oder Polymethacrylamide mit einer Methyl-, Ethyl- oder Propylgruppe quaterniert, wobei die Ethyl- oder Propylgruppe durch eine Hydroxygruppe substituiert sein kann.

Die Erfindung betrifft daher Anionenaustauscher auf Basis vernetzter N-alkylierter Polyacryl- oder Polymethacrylamide, die sowohl schwachbasische Aminogruppen als auch quaternäre Ammoniumgruppen aufweisen, die dadurch gekennzeichnet sind, dass der Anteil der quaternären Ammoniumgruppen 10 bis 80% der gesamten basischen Gruppen des Anionenaustauschers beträgt und dass die Aminogruppe des N-aminoalkylierten Poly-(meth)-acrylamidharzes durch die Methyl-, Ethyl- oder Propylgruppe quaterniert ist, wobei die Ethyl- oder Propylgruppe durch eine Hydroxygruppe substituiert sein kann.

Besonders bewährt haben sich solche Anionenaustauscher auf Basis vernetzter N-alkylierter Polyacryl- oder Polymethacrylamide, in denen der Anteil der quartären Ammoniumgruppen 15 bis 65% der im Anionenaustauscher enthaltenen basischen Gruppen beträgt.

Die erfindungsgemässen Anionenaustauscher weisen unter Praxisbedingungen ein sehr viel grösseres Adsorptionsvermögen für schwache Säuren, insbesondere für Kieselsäure, auf als die bekannten voll-quaternierten und teilquaternierten Anionenaustauscher. Unter schwachen Säuren, die von den erfindungsgemässen Anionenaustauschern gebunden werden, sind sowohl schwache anorganische Säuren wie Kieselsäure und Kohlensäure als auch organische Säuren wie Carbonsäuren, z.B. Ameisensäure, Essigsäure, Zitronensäure, Benzoesäure, ferner Phenole und Huminsäuren zu verstehen.

Ausserdem sind die erfindungsgemässen Anionenaustauscher leichter und vollständiger regenerierbar als die bekannten Anionenaustauscher. Auch aus dem Wasser aufgenommene organische Stoffe werden beim Regenerieren mit Natronlauge leichter und praktisch vollständig wieder abgegeben, so dass keine Verschmutzung der Anionenaustauscher durch diese Stoffe eintritt.

Bei der Entsäuerung von Wässern, die ausschliesslich schwache Säuren enthalten, ist die Nutzbare Kapazität der erfindungsgemässen Anionenaustauscher wesentlich grösser als die der bekannten starkbasischen Anionenaustauscher.

Bei Vergleichsversuchen mit entbastem und entgastem Wasser wiesen die erfindungsgemässen Anionenaustauscher um bis zu 150% höhere Werte der Nutzbaren Kapazität auf als die starkbasischen, vollständig quaternierten Anionenaustauscher vom Polystyrol- und Polyacrylamid-Typ und um bis zu 50% höhere Nutzbare Kapazitäten als die teilquaternierten Anionenaustauscher vom Polystyrol-Typ. Mit der Erhöhung der Nutzbaren Kapazität ist ausserdem ein drastischer Rückgang des Regeneriermittelbedarfs (Natronlauge) verbunden von etwa 250% der Theorie für vollständig quaternierte Anionenaustauschharze, über etwa 150% für teilquaternierte Anionenaustauschharze vom Polystyrol-Typ auf 105 bis 110% der Theorie für die erfindungsgemässen Anionenaustauscher.

Eine Erhöhung der Nutzbaren Kapazität und Abnahme des Regeneriermittelbedarfs tritt aber nicht nur bei der Entsäuerung von entbastem und entgastem Wasser ein, sondern auch bei der Entsäuerung von lediglich entbastem Wasser und bei Wasser, das nur schwache Säuren enthält.

Die vorstehend beschriebenen vorteilhaften Eigenschaften der erfindungsgemässen Anionenaustauscher sind deshalb so überraschend, weil bekannt ist, dass sowohl die vollständig quaternierten starkbasischen als auch die schwachbasischen, tertiäre Aminogruppen enthaltenden Anionenaustauscher vom Polyacrylamid-Typ keine wesentlich grössere Nutzbare Kapazität aufweisen als die vergleichbaren Anionenaustauscher vom Polystyrol-Typ.

Die vorstehend genannten vorteilhaften Eigenschaften der erfindungsgemässen Anionenaustauscher sind auch unabhängig von dem Ionenaustauschverfahren, in dem sie eingesetzt werden, z.B. ob sie in Gleichstrom- oder Gegenstromverfahren eingesetzt werden. Die Anwendung der erfindungsgemässen Anionenaustauscher vom Polyacrylamid-Typ in Entsalzungsanlagen bietet folgende wirtschaftlichen Vorteile: Die höhere Nutzbare Kapazität ermöglicht bei vergleichbarer Leistung der Anlagen Einsparungen an der Harzmenge und gleichzeitig an der Apparatur. Darüber hinaus werden infolge des geringeren Regeneriermittelbedarfes wesentliche Kostenersparnisse erzielt. Die Nutzbare Kapazität der erfindungsgemässen Anionenaustauscher ist ausserdem weitgehend unabhängig von der spezifischen Belastung. Auch in dieser Hinsicht unterscheiden sie sich vorteilhaft von den bekannten Anionenaustauschern. Gegenüber den bekannten, vollständig quaternierten starkbasischen Anionenaustauschern besitzen sie ferner den Vorzug, dass sie bei der Beladung bzw.

bei der Regenerierung praktisch keine Volumenänderung zeigen, dies ist strömungstechnisch von Vorteil, ausserdem wird die osmotisch-mechanische Belastung der Austauscherkörner im Betrieb in vorteilhafter Weise herabgesetzt.

Die Herstellung der erfindungsgemässen Anionenaustauscher kann nach bekannten Verfahren, beispielsweise nach dem in der US-A-26 75 359 beschriebenen Verfahren durchgeführt werden. Nach diesem Verfahren werden vernetzte Acrylsäureester- bzw. Methacrylsäureesterharze durch Aminolyse mit Polyaminen, die mindestens eine primäre Aminogruppe enthalten, in Harze vom Polyacrylamid-Typ überführt. Derartige Polyacrylamidharze enthalten je nach der Art des verwendeten Polyamins und der Reaktionsführung primäre, sekundäre und/oder tertiäre Aminogruppen. Sie stellen schwachbasische Anionenaustauschharze dar. Durch erschöpfende Quaternierung mit Alkylierungsmitteln wie Methylchlorid werden daraus starkbasische Anionenaustauscher mit quaternären Ammoniumgruppen hergestellt. Starkbasische Anionenaustauscher vom Polyacrylamid-Typ mit makroporöser Struktur werden in der US-A-37 91 866 beschrieben. In der britischen Patentschrift 11 13 149 ist die Herstellung unter Verwendung bestimmter Vernetzungsmittel hergestellter gelförmiger und makroporöser Anionenaustauscher auf Basis vernetzter Polyacrylsäureamide beschrieben.

Die Herstellung der erfindungsgemässen Anionenaustauscher verläuft über 3 Stufen. In der ersten Stufe wird ein perlförmiges, vernetztes (Meth-)Acrylsäureesterharz in bekannter Weise durch Mischpolymerisation eines niederen Acrylsäure- oder Methacrylsäurealkylesters mit mindestens einem Vernetzungsmittel hergestellt. Besonders geeignete Ester sind der Acrylsäuremethyl- und Ethylester. Geeignete Vernetzungsmittel sind z.B. Divinylbenzol, Divinyltoluol, Divinylnaphthalin, Divinylethylbenzol, N,N′-Methylen-diacrylamid, N,N′-Methylendimethacrylamid, N,N′-Ethylendiacrylamid, Trivinylbenzol, Trivinylnaphthalin, Polyvinylether von Polyolen wie Ethylenglykol, Glycerin, Pentaerithrit, aliphatische und cycloaliphatische Kohlenwasserstoffe mit mindestens zwei Allylgruppierungen wie Hexadien-(1,5), Dimethylhexadien-(1,5), Octadien-(1,7), Trivinylcyclohexan. Besonders bewährt haben sich als Vernetzungsmittel Divinylbenzol und Mischungen aus Divinylbenzol und aliphatischen Kohlenwasserstoffen mit mindestens zwei Allylgruppierungen oder Polyol-polyvinylethern. Divinylbenzol wird vorteilhaft in einer Menge von 2 bis 20 Gew.-%, besagte aliphatische Kohlenwasserstoffe oder Polyolpolyvinylether vorteilhaft in einer Menge von 2 bis 12 Gew.-%, bezogen auf die Gesamtmenge der Monomeren, eingesetzt.

Die vernetzten (Meth)Acrylsäureesterharze können als gelförmige oder makroporöse Harze hergestellt werden. Makroporöse Harze werden erhalten, wenn die Perpolymerisation, z.B. in Gegenwart von organischen Lösungsmitteln, durchgeführt wird, in denen sich die Monomeren lösen, das Polymerisat aber unlöslich und nicht bzw. kaum quellbar ist. Solche organischen Lösungsmittel sind beispielsweise aliphatische Kohlenwasserstoffe, Alkohole, Ester, Ether, Ketone, Trialkylamine, Nitroverbindungen. Sie werden üblicherweise in einer Menge von bis zu 100 Gew.-%, bezogen auf das Gesamtgewicht der Monomeren, eingesetzt.

Die Mischpolymerisation wird gewöhnlich nach dem Suspensionspolymerisationsverfahren in Gegenwart eines radikalischen Initiators wie Benzoylperoxid oder einer Azoverbindung, beispielsweise Azo-bis-isobutyronitril, im Temperaturbereich von 20–120°C und unter Verwendung üblicher Suspensionsstabilisatoren ausgeführt.

In der 2. Reaktionsstufe wird das Esterharz mit Polyaminen, die mindestens eine primäre Aminogruppe enthalten, aminolysiert. Als geeignete Amine seien genannt: Polyalkylenpolyamine wie Diethylentriamin, Dipropylentriamin, Triethylentetramin, Tetraethylenpentamin, Oxyethyl-diethylentriamin, N-Aminoethylmorpholin, N,N-Dimethylethylendiamin, N,N-Dimethylpropylendiamin-(1,3), N,N-Diethylpropylendiamin-(1,3). N,N-Dimethylpropylendiamin-(1,3) hat sich als besonders geeignet erwiesen.

In der 3. Reaktionsstufe werden die Aminogruppen des gebildeten N-aminoalkylierten Poly-(meth)acrylamidharzes mit geeigneten Alkylierungsmitteln partiell quaterniert. Hierfür können bekannte Alkylierungsmittel, wie Dialkylsulfate, Alkylenoxide, Halogenhydrine, Epihalogenhydrine und vor allem Alkylhalogenide wie Methyl-, Ethyl- oder Propylchlorid angewandt werden.

Beispiele 1–5

Je 1000 ml des schwachbasischen Anionenaustauschers (Gehalt an tertiären Aminogruppen: 1,69 Mol/l), dessen Herstellung nachstehend beschrieben ist, werden in 1 l vollentsalztem Wasser suspendiert. Nach Zugabe äquimolarer Mengen Natronlauge (bezogen auf das einzuleitende Methylchlorid) zu den einzelnen Austauscherproben wird in die Suspensionen bei Raumtemperatur Methylchlorid eingeleitet. Anschliessend werden die einzelnen Reaktionsgemische durch Zugabe von Salzsäure angesäuert, bis die Suspensionen einen pH-Wert von 2 aufweisen. Auf diese Weise werden die teilquaternierten Anionenaustauscher vollständig in ihre Salzform überführt.

Nach dem Abtrennen der Anionenaustauscher von ihren Reaktionslösungen werden sie im Filterrohr mit je 5 l vollentsalztem Wasser ausgewaschen.

In der nachstehenden Tabelle 1 sind die für die einzelnen Ansätze verwendeten Mengen an Methylchlorid, die für das Einleiten des Methylchlorids angewendete Zeit, die Einsatzmengen an Natronlauge, die Ausbeuten an teilquaternierten Anionenaustauschharzen, der Gesamtgehalt an starkbasischen und schwachbasischen Gruppen in mmol/ml Austauscher (Totalkapazität: TK), der Gehalt an starkbasischen Gruppen in mmol/ml und in % der TK (Gehalt an starkbasischen Gruppen in % der TK = Quaternierungsgrad) sowie die Volumenänderung in % bei der Regenerierung der mit Salzsäure beladenen Austauscher durch Natronlauge (5%ig) zusammengestellt.

Der verwendete schwachbasische Anionenaustauscher war wie folgt erhalten worden.

a) Herstellung des makroporösen Acrylsäureester-Perlpolymerisates

In einer Mischung aus 4007 g Acrylsäuremethylester, 358 g technischem Divinylbenzol (Gehalt an reinem Divinylbenzol: 62,8 Gew.-%; Rest Ethylstyrol) und 138 g Octadien-(1,7) wurden 225 g Isododecan und 30 g Dibenzoylperoxid (75%ig) gelöst. Die Mischung wurde anschliessend in eine wässrige Lösung von 6,75 g Methylcellulose und 0,225 g Natriumnitrit in 4500 g Wasser eingerührt und zunächst 5 Stunden bei 65°C, anschliessend 2 Stunden bei 90°C perlpolymerisiert.

Ausbeute: 4297 g Perlpolymerisat (trocken); Korndurchmesser: 0,1 bis 1,0 mm.

b) Aminolyse des makroporösen Acrylsäureester-Perlpolymerisates

250 g des gemäss a) erhaltenen Perlpolymerisates wurden mit 1200 g N,N-Dimethylpropylendiamin-(1,3) 5 Stunden auf 195 bis 200°C erhitzt. Der gebildete makroporöse, schwachbasische Anionenaustauscher wurde anschliessend vom überschüssigen Amin abgetrennt und im Filterrohr mit vollentsalztem Wasser neutral gewaschen.

Ausbeute: 1250 ml Anionenaustauscher; Gehalt an schwachbasischen Gruppen: 1,69 mmol/l.

Tabelle 1

| Beispiel | Methyl-chlorid | Einlei-tungszeit | NaOH | Ausbeute | TK | starkbasische Gruppen | | Volumen-änderung bei Regenerierung |
|---|---|---|---|---|---|---|---|---|
| | [g] | [h] | [g] | [ml] | [mmol/ml] | [mmol/ml] | [% d. TK] | [%] |
| 1 | 10,5 | 3 | 8,3 | 1.240 | 1,36 | 0,14 | 10 | −10 |
| 2 | 21 | 6 | 16,6 | 1.240 | 1,36 | 0,25 | 18 | − 3 |
| 3 | 34 | 9 | 26,9 | 1.250 | 1,35 | 0,49 | 36 | + 2 |
| 4 | 57 | 16 | 45,1 | 1.255 | 1,34 | 0,79 | 59 | + 9 |
| 5 | 72,5 | 20 | 57,4 | 1.255 | 1,35 | 1,0 | 74 | +11 |

Beispiel 6

1 l eines gelförmigen, schwachbasischen Anionenaustauschers (Gehalt an tertiären Aminogruppen 1,88 mol/l), hergestellt durch Aminolyse von 250 g eines Acrylsäureester-Perlpolymerisates aus Acrylsäureethylester, 5% Divinylbenzol und 3% 1,2,4-Trivinylcyclohexan mit 1200 g N,N-Dimethylpropylendiamin-(1,3) gemäss Beispiel 1b wird unter den in Beispiel 1 bis 5 beschriebenen Bedingungen mit 38 g Methylchlorid partiell quaterniert.
Ausbeute: 1,22 l Anionenaustauscher;
Gehalt an starkbasischen Gruppen: 0,54 mmol/ml = 33% der TK;
Gehalt an schwachbasischen Gruppen: 1,09 mmol/ml;
Volumenänderung bei der Regenerierung mit Natronlauge: keine.

Beispiel 7

1 l eines makroporösen, schwachbasischen Anionenaustauschers (Gehalt an tertiären Aminogruppen 1,35 mol/l), hergestellt durch Aminolyse von 250 g eines Acrylsäureesterharzes, das durch Perlpolymerisation von 2001 g Acrylsäuremethylester, 181,5 g technischem Divinylbenzol (Divinylbenzolgehalt: 62,1%) und 67,5 g Hexadien-(1,5) in Gegenwart von 450 g Isododecan gewonnen worden war, mit 1500 g N,N-Diethylpropylendiamin-(1,3) gemäss Beispiel 1b wird unter den in Beispiel 1 bis 5 beschriebenen Bedingungen mit 36,6 g Ethylchlorid partiell quaterniert.
Ausbeute: 1,3 l Anionenaustauscher;
Gehalt an starkbasischen Gruppen: 0,39 mmol/ml = 35% der TK;
Gehalt an schwachbasischen Gruppen: 0,72 mmol/ml;
Volumenzunahme bei Regenerierung mit Natronlauge: 2%.

Beispiel 8

1 l eines makroporösen, schwachbasischen Anionenaustauschers (Gehalt an tertiären Aminogruppen 1,85 mol/l), hergestellt durch Aminolyse von 250 g eines Acrylsäuremethylesterharzes, das durch Perlpolymerisation von 3890 g Acrylsäuremethylester und 610 g technischem Divinylbenzol (Divinylbenzoylgehalt: 59%) in Gegenwart von 450 g Testbenzin gewonnen worden war, mit 1200 g N,N-Dimethylpropylendiamin-(1,3) gemäss Beispiel 1b wird in 1 l vollentsalztem Wasser suspendiert und nach Zusatz von 30 g NaOH (als 45%ige wässrige Lösung) unter den in Beispiel 1 bis 5 beschriebenen Bedingungen mit 37,5 g Methylchlorid quaterniert.
Ausbeute: 1,220 l Anionenaustauscher;
Gehalt an starkbasischen Gruppen: 0,5 mmol/ml = 33% der TK;
Gehalt an schwachbasischen Gruppen: 1,0 mmol/ml;
Volumenzunahme bei Regenerierung mit Natronlauge: 1%.

Beispiel 9

210 ml eines makroporösen, schwachbasi-schen Anionenaustauschers (Gehalt an tertiären Aminogruppen 1,76 mol/l), hergestellt durch Aminolyse von 86 g eines Methacrylsäureesterharzes, das durch Perlpolymerisation von 889,5 g Methacrylsäuremethylester, 80,5 g technischem Divinylbenzol (Divinylbenzoylgehalt: 62%) und 30 g Octadien-(1,7) in Gegenwart von 100 g Isododecan gewonnen worden war, mit 415 g N,N'-Dimethylpropylendiamin-(1,3) bei 245°C in 10 Stunden, werden in 200 ml vollentsalztem Wasser suspendiert und nach Zusatz von 20 g Methylchlorid in 20 Stunden bei 40°C partiell quaterniert. Die Aufarbeitung erfolgte wie in Beispiel 1 bis 5 beschrieben.
Ausbeute: 315 ml Anionenaustauscher;
Gehalt an starkbasischen Gruppen: 0,32 mmol/ml = 30% der TK;
Gehalt an schwachbasichen Gruppen: 0,74 mmol/ml;
Volumenzunahme bei Regenerierung mit Natronlauge: 2%.

Vergleichsbeispiele A bis E

Herstellung von Anionenaustauschern vom Polystyrol-Typ mit starkbasischen quaternären Ammoniumgruppen und schwachbasischen tertiären Aminogruppen.

Proben eines handelsüblichen, makroporösen schwachbasischen Anionenaustauschers mit tertiären Aminogruppen, hergestellt nach den Angaben der DE-C-24 18 976 aus einem mit 6% Divinylbenzol vernetzten und unter Zusatz von 70% Isododecan porös gemachten Styrol-Perlpolymerisates, wurden unter den in Beispiel 1 bis 5 beschriebenen Bedingungen mit Methylchlorid partiell quaterniert. Dabei wurde jeweils ein 10%iger Überschuss an Methylchlorid, bezogen auf den gewünschten Quaternierungsgrad, angewendet.

Der Gehalt an starkbasischen Gruppen in mmol/ml der teilquaternierten Anionenaustauscher und in % ihres gesamten Gehaltes an starkbasischen und schwachbasischen Gruppen (% der Totalkapazität TK) betrug:

| Vergleichsbeispiel | starkbasische Gruppen | |
| --- | --- | --- |
| | [mmol/ml] | [% der TK] |
| A | 0,23 | 17 |
| B | 0,31 | 23 |
| C | 0,48 | 35 |
| D | 0,78 | 58 |
| E | 1,29 | 97 |

Beispiel 10

Je 1 l der in den Beispielen 1 bis 5 und den Vergleichsbeispielen A bis E beschriebenen Anionenaustauscher werden im Filterrohr (Innendurchmesser 55 mm) mehrfach mit entbastem und entgastem Leitungswasser bei einer spezifischen Belastung von 20 l Wasser pro 1 Harz je Stunde bis zum Kieselsäuredurchbruch (0,1 mg/l SiO₂ im Filterablauf) beladen und anschliessend mit 40 g NaOH (als 4%ige wässrige Lösung) bei 20°C im Gegenstrom bei einer spezifischen Belastung von 2 l pro l Harz je Stunde regeneriert.

Analysenwerte des entbasten und entgasten Wassers:

starke Säuren (gesamt): 7 mmol/l
Schwache Säuren (gesamt): 0,5 mmol/l
Kieselsäure (als $SiO_2$): 7 mg/l

In Tabelle 2 sind die für die einzelnen Anionenaustauscher erhaltenen Werte für Nutzbare Kapazität (NK) und Regeneriermittelausnutzung (Regeneriermittelmenge in mol-% der NK) aufgeführt. Bei den angegebenen Werten handelt es sich um Mittelwerte aus mindestens 3 Filterläufen.

Tabelle 2

| Anionenaustauscher | starkbasische Gruppen [mol/l] | [% d. TK] | NK [mol/l] | Regeneriermittelmenge [Mol-% der NK] |
|---|---|---|---|---|
| Beispiel | | | | |
| 1 | 0,14 | 10 | 0,67 | 149 |
| 2 | 0,25 | 18 | 0,92 | 109 |
| 3 | 0,49 | 36 | 0,95 | 105 |
| 4 | 0,79 | 59 | 0,76 | 132 |
| 5 | 1,0 | 74 | 0,66 | 152 |
| Beispiel | | | | |
| A | 0,23 | 17 | 0,63 | 159 |
| B | 0,31 | 23 | 0,62 | 161 |
| C | 0,48 | 35 | 0,60 | 167 |
| D | 0,78 | 58 | 0,57 | 175 |
| E | 1,29 | 97 | 0,38 | 263 |

Aus Tabelle 2 ist ersichtlich, dass die Nutzbare Kapazität (NK) der erfindungsgemässen Austauscher vom Polyacrylamid-Typ stets grösser ist als die vergleichbarer Austauscher vom Polystyrol-Typ. (Vergleichbar sind Austauscher, deren Gehalt an starkbasischen Gruppen etwa gleich gross ist.)

Die höchsten NK-Werte weisen die erfindungsgemässen Anionenaustauscher auf, deren Gehalt an starkbasischen Gruppen im Bereich von 15 bis 65% der Gesamtkapazität (TK) liegt (vgl. Beispiele 2 und 3). Diese Werte liegen um etwa 50% über den NK-Werten der vergleichbaren Anionenaustauscher A und C vom Polystyrol-Typ und um nahezu 150% über dem NK-Wert eines praxisüblichen, makroporösen, starkbasischen Anionenaustauschharzes (Vergleichsbeispiel E).

Darüber hinaus geht aus Tabelle 2 hervor, dass die Ausnutzung der angewandten Regeneriermittelmenge bei den erfindungsgemässen Anionenaustauschern vom Polyacrylamid-Typ wesentlich besser ist als bei den Vergleichsharzen vom Polystyrol-Typ: Bei den erfindungsgemässen Anionenaustauschern mit den höchsten NK-Werten, Beispiele 2 und 3, betrug der Regeneriermittelüberschuss unter den Versuchsbedingungen nur 9 bzw. 5%, bezogen auf die gefundene Nutzbare Kapazität, bei den besten Vergleichsharzen dagegen etwa 60%.

Beispiel 11

Unter den in Beispiel 10 beschriebenen Bedingungen werden je 1 l des in Beispiel 3 und des in Vergleichsbeispiel C beschriebenen Anionenaustauschers mehrfach im Gegenstrom beladen und regeneriert. Die Beladungen werden mit drei verschiedenen Wässern durchgeführt; und zwar

1. mit entbastem und entgastem Wasser (Leitungswasser, das durch Behandlung mit einem stark sauren Kationenaustauscher entbast und durch Überleiten über einen Kohlensäurerieseler entgast worden war); Gehalt des Wassers an schwachen Säuren (Kohlensäure + Kieselsäure): 7 Mol-%, bezogen auf den Gesamtgehalt an schwachen und starken Säuren;

2. mit entbastem Wasser (Leitungswasser, das durch Behandeln mit einem starksauren Kationenaustauscher entbast worden war); Gehalt an schwachen Säuren (Kohlensäure + Kieselsäure): 31 Mol-%, bezogen auf den Gesamtgehalt (an schwachen und starken) Säuren;

3. mit entsalztem Wasser (Leitungswasser, das durch Behandeln mit starksauren und schwachbasischen lonenaustauschern entsalzt worden war); Gehalt an schwachen Säuren: 100 Mol-%.

In Tabelle 3 sind die bei Verwendung der verschiedenen Wässer für die beiden Anionenaustauscher erhaltenen Werte für die Nutzbare Kapazität (NK) und die Regeneriermittelausnutzung (Regeneriermittelmenge in Mol-% der NK) zusammengestellt. Bei den angegebenen Werten handelt es sich um Mittelwerte aus mindestens 3 Filterläufen.

Tabelle 3

| Austauscher | starkbasische Gruppen | | Gehalt des zu behandelnden Wassers an | | | | Nk | Regeneriermittelmenge |
|---|---|---|---|---|---|---|---|---|
| | | | starken Säuren | | schwachen Säuren | | | |
| | [mol/l] | [% d. TK] | [mmol/l] | [%] | [mmol/l] | [%] | [mol/l] | [Mol-% der NK] |
| gemäss Beispiel 3 | 0,49 | 36 | | | | | | |
| (1) | | | 7,0 | 93 | 0,5 | 7 | 0,95 | 105 |
| (2) | | | 7,9 | 69 | 3,6 | 31 | 0,8 | 125 |
| (3) | | | 0 | 0 | 4,8 | 100 | 0,73 | 137* |
| gemäss Vergleichsbeispiel C | 0,48 | 35 | | | | | | |
| (1) | | | 7,0 | 93 | 0,5 | 7 | 0,6 | 167 |
| (2) | | | 7,9 | 69 | 3,6 | 31 | 0,5 | 200 |
| (3) | | | 0 | 0 | 4,8 | 100 | 0,3 | 330 |

* In diesem Versuch wurde 2%ige Natronlauge angewendet, da sonst Kieselsäureausfällung eintritt.

Wie aus Tabelle 3 hervorgeht, weist der erfindungsgemässe Anionenaustauscher vom Polyacrylamid-Typ nach Beispiel 3 für alle Wässer wesentlich höhere NK-Werte auf als der Anionenaustauscher vom Polystyrol-Typ (Vergleichsbeispiel C). Bei Wässern mit einem Gehalt an schwachen Säuren von 7 bzw. 31 Mol-%, bezogen auf den Gesamtgehalt an starken und schwachen Säuren werden um etwa 60% höhere NK-Werte gefunden; enthielt das Wasser nur Kohlensäure und Kieselsäure (Anteil der schwachen Säuren = 100 Mol-%), so sind die NK-Werte des erfindungsgemässen Anionenaustauschharzes um etwa 150% höher als die des Vergleichsharzes.

Weiter geht aus Tabelle 3 hervor, dass auch die Ausnutzung der angewandten Regeneriermittelmenge in allen drei Fällen bei dem erfindungsgemässen Anionenaustauschharz wesentlich besser ist als bei dem Vergleichsharz vom Polystyrol-Typ. So beträgt der Regeneriermittelüberschuss bei dem Anionenaustauscher gemäss Beispiel 3 je nach den Versuchsbedingungen 5 bis 37%, bezogen auf den gefundenen NK-Wert, bei dem Vergleichsharz C 67 bis 230%.

Beispiel 12

Je 1 l der in Beispiel 3 und den Vergleichsbeispielen C und E beschriebenen Anionenaustauscher werden im Filterrohr (Innendurchmesser 55 mm) mehrfach mit entbastem und entgastem Leitungswasser bei einer spezifischen Belastung von 20 l Wasser pro l Harz je Stunde bis zum Kieselsäuredurchbruch (0,1 mg/l $SiO_2$ im Filterablauf) beladen und anschliessend mit 80 g NaOH (als 4%ige wässrige Lösung) bei 20°C im Gleichstrom bei einer spezifischen Belastung von 5 l pro l Harz je Stunde regeneriert. Gehalt des entbasten und entgasten Wassers an schwachen Säuren 7 Mol-%, bezogen auf den Gesamtgehalt an schwachen und starken Säuren.

In Tabelle 4 sind die für die einzelnen Anionenaustauscher erhaltenen Werte für Nutzbare Kapazität (NK) und Regenerierungsmittelausnutzung (Regeneriermittelmenge in Mol-% der NK) aufgeführt. Bei den angegebenen Werten handelt es sich um Mittelwerte aus mindestens 3 Filterläufen.

Tabelle 4

| Anionenaustauscher | starkbasische Gruppen | | NK | Regeneriermittelmenge |
|---|---|---|---|---|
| | [mol/l] | [% d. TK] | [mol/l] | [Mol-% der NK] |
| Beispiel 3 | 0,49 | 36 | 0,96 | 208 |
| Beispiel C | 0,48 | 35 | 0,68 | 294 |
| Beispiel E | 1,29 | 97 | 0,45 | 444 |

Aus Tabelle 4 ist ersichtlich, dass die erfindungsgemässen Anionenaustauscher auch bei der konventionellen Gleichstrom-Verfahrensweise deutliche Vorteile bezüglich Nutzbarer Kapazität (NK) und Regeneriermittelverbrauch bieten. Bei einem um 30 bzw. 50% verringerten Regeneriermittelverbrauch weisen sie eine um 30 bzw. 50% gesteigerte Nutzbare Kapazität auf.

Beispiel 13

Je 1 l der in Beispiel 3 und Vergleichsbeispiel E beschriebenen Anionenaustauscherharze werden in eine Glassäule (Innendurchmesser: 70 mm) eingespült und mit 100 g NaOH (als 4%ige wässrige Lösung) regeneriert. Der Regeneriermittelüberschuss wird mit 4 l entsalztem Wasser ausgewaschen.

Die so vorbereiteten Anionenaustauscher werden bei einer spezifischen Belastung von 10 l Lösung pro l Harz und je Stunde mit einer wässrigen Essigsäure-Lösung, die im Liter 900 mg (= 15 mMol) Essigsäure enthält, beladen, bis die Konzentration der Essigsäure im Filterablauf auf 90 mg/l, d.h. auf 10% der Essigsäure-Konzentration der ursprünglichen Lösung angestiegen ist.

Bis zu diesem Durchbruchspunkt wurden durch die Harze folgende Mengen an Lösung filtriert bzw. folgende Mengen an Essigsäure aufgenommen:

|  | Anionenaustauscher gemäss Beispiel 3 | Vergleichsbeispiel E |
|---|---|---|
| Liter Lösung | 69,9 | 36,9 |
| Essigsäure [g] | 62,9 | 33,2 |
| Nutzbare Kapazität [mol/l Harz] | 1,048 | 0,553 |

Bis zur etwa 93%igen Beladung der beiden Harze betrug der Restgehalt an Essigsäure im Filterablauf weniger als 3 mg/l.

Beispiel 14

In 3 Glassäulen $a_1$, $b_1$, $c_1$ werden je 1 l des in Beispiel 3 beschriebenen Anionenaustauscherharzes und in 3 Glassäulen $a_2$, $b_2$, $c_2$ je 1 l des in Vergleichsbeispiel E beschriebenen Anionenaustauscherharzes eingespült (Innendurchmesser der Glassäulen: 70 mm). Jede der mit 1 l Harz gefüllten Säulen wird mit 100 g NaOH (als 4%ige wässrige Lösung) regeneriert. Der Regeneriermittel-Überschuss wird aus jeder Säule mit jeweils 4 l entsalztem Wasser ausgewaschen.

Die so vorbereiteten Anionenaustauscher werden bei einer spezifischen Belastung von 10 l Lösung je l Harz und je Stunde mit den nachstehend beschriebenen wässrigen Lösungen (Arbeitsrichtung: von oben nach unten) beladen, bis die Leitfähigkeit im Filterablauf auf 50 μS/cm angestiegen ist. Gemessen wird die Menge an Lösung, die bis zu diesem Durchbruchspunkt durch jede der Säulen filtriert werden kann. Aus dieser Menge ergibt sich die nutzbare Kapazität des in der Säule befindlichen Anionenaustauschers.

Zum Beladen wurden folgende Lösungen verwendet:

A zum Beladen der Säulen $a_1$ und $a_2$ eine wässrige Essigsäurelösung, Gehalt an H-Ionen: 14,6 mMol/l; Leitfähigkeit: 185 μS/cm;
B in den Säulen $b_1$ und $b_2$ eine wässrige Benzoesäure-Lösung (Gehalt an H-Ionen: 14,95 mMol/l; Leitfähigkeit: 290 μS/cm);
C zum Beladen der Säulen $c_1$ und $c_2$ eine wässrige, durch vorhergehende Behandlung mit einem Kationenaustauscher entbaste Melasse-Lösung (Gehalt an H-Ionen: 15,2 mMol/l; Leitfähigkeit: 1760 μS/cm; Extinktion E (bei 420 nm; Schichtdikke: 10 cm) = 8,4).

In der nachstehenden Tabelle 5 sind die Mengen an Lösung, die durch die einzelnen Säulen bis zum Durchbruchspunkt filtriert werden konnten und die aus diesen Lösungsmengen errechneten nutzbaren Kapazitäten der Anionenaustauscher zusammengestellt [bei den angegebenen Werten handelt es sich um Mittelwerte aus 5 aufeinanderfolgenden Arbeitszyklen (Arbeitszyklus: Beladen, Regenerieren, Auswaschen)].

Tabelle 5

|  | A Säule | | B Säule | | C Säule | |
|---|---|---|---|---|---|---|
|  | $a_1$ | $a_2$ | $b_1$ | $b_2$ | $c_1$ | $c_2$ |
| Liter Lösung | 72 | 52 | 68 | 42 | 48 | 30 |
| Nutzbare Kapazität [mol/l Harz] | 1,05 | 0,76 | 1,02 | 0,63 | 0,73 | 0,46 |
| Entfärbung der Lösung [%] | – | – | – | – | 97 | 96 |

Patentansprüche

1. Anionenaustauscher auf Basis vernetzter N-alkylierter Polyacryl- oder Polymethacrylamide, die sowohl schwachbasische Aminogruppen als auch quaternäre Ammoniumgruppen aufweisen, dadurch gekennzeichnet, dass der Anteil der quaternären Ammoniumgruppen 10 bis 80% der gesamten basischen Gruppen des Anionenaustauschers beträgt und dass die Aminogruppe des N-aminoalkylierten Poly-(meth)acrylamidharzes durch die Methyl-, Ethyl- oder Propylgruppe quaterniert ist, wobei die Ethyl- oder Propylgruppe durch eine Hydroxygruppe substituiert sein kann.

2. Anionenaustauscher gemäss Anspruch 1, dadurch gekennzeichnet, dass der Anteil der quaternären Ammoniumgruppen 15 bis 65% der gesamten basischen Gruppen des Anionenaustauschers beträgt.

3. Verfahren zur Herstellung von Anionenaustauschern auf Basis vernetzter N-alkylierter Polyacryl- oder Polymethacrylamide, dadurch gekennzeichnet, dass man 10 bis 80% der schwachbasischen Aminogruppen in Anionenaustauschern auf Basis vernetzter N-alkylierter Polyacryl- oder Polymethacrylamide nach an sich bekannten Verfahren mit $C_1$–$C_3$-Halogeniden, Dialkylsulfaten, Alkylenoxiden, Halogenhydrinen oder Epihalogenhydrinen quaterniert.

4. Verfahren gemäss Anspruch 3, dadurch gekennzeichnet, dass man 15 bis 65% der schwachbasischen Aminogruppen in den Anionenaustauschern auf Basis vernetzter N-alkylierter Polyacryl- oder Polymethacrylamide quaterniert.

5. Verwendung der Anionenaustauscher gemäss Ansprüchen 1 und 2 zur Adsorption schwacher Säuren.

## Claims

1. Anion exchangers based on crosslinked N-alkylated polyacrylamides or polymethacrylamides, which contain both weakly basic amino groups and quaternary ammonium groups, characterised in that the proportion of quaternary ammonium groups is 10 to 80% of the total basic groups of the anion exchanger and in that the amino group of the N-aminoalkylated poly-(meth)acrylamide resin is quaternised by the methyl, ethyl or propyl group, it being possible for the ethyl or propyl group to be substituted by a hydroxyl group.

2. Anion exchangers according to Claim 1, characterised in that the proportion of the quaternary ammonium groups is 15 to 65% of the total basic groups of the anion exchanger.

3. Process for the preparation of anion exchangers based on crosslinked N-alkylated polyacrylamides or polymethacrylamides, characterised in that 10 to 80% of the weakly basic amino groups in anion exchangers based on crosslinked N-alkylated polyacrylamides or polymethacrylamides are quaternised by processes known per se with $C_1$–$C_3$ halides, dialkyl sulphates, alkylene oxides, halogenohydrins or epihalogenohydrins.

4. Process according to Claim 3, characterised in that 15 to 65% of the weakly basic amino groups in the anion exchangers based on crosslinked N-alkylated polyacrylamides or polymethylacrylamides are quaternised.

5. Use of the anion exchangers according to Claims 1 an 2 for the adsorption of weak acids.

## Revendications

1. Echangeurs anioniques à base de polyacrylamides ou polyméthacrylamides N-alkylés réticulés, qui présentent aussi bien des groupes amino faiblement basiques que des groupes ammonium quaternaire, caractérisés en ce que la proportion de groupes ammonium quaternaire est de 10 à 80 pour cent des groupes basiques totaux de l'échangeur anionique et en ce que le groupe amino de la résine de poly-(méth)acrylamide N-aminoalkylé est quaternisé par le groupe méthyle, éthyle ou propyle, le groupe éthyle ou propyle pouvant être substitué par un groupe hydroxy.

2. Echangeurs anioniques suivant la revendication 1, caractérisé en ce que la proportion de groupes ammonium quaternaire est de 15 à 65% des groupes basiques totaux de l'échangeur anionique.

3. Procédé de production d'échangeurs anioniques à base de polyacrylamides ou polyméthacrylamides N-alkylés réticulés, caractérisé en ce qu'on quaternise 10 à 80% des groupes amino faiblement basiques des échangeurs anioniques à base de polyacrylamides ou de polyméthacrylamides N-alkylés réticulés par des procédés connus avec des halogénures en $C_1$–$C_3$, des sulfates de dialkyle, des oxydes d'alkylène, des halogénhydrines ou des épihalogénhydrines.

4. Procédé suivant la revendication 3, caractérisé en ce qu'on quaternise 15 à 65% des groupes amino faiblement basiques des échangeurs anioniques à base de polyacrylamides ou polyméthacrylamides N-alkylés réticulés.

5. Utilisation des échangeurs anioniques suivant les revendications 1 et 2 pour l'adsorption d'acides faibles.